# EUROPÄISCHE PATENTSCHRIFT

(11) **EP 1 797 954 B1**
(45) Veröffentlichungstag und Bekanntmachung des Hinweises auf die Patenterteilung: **02.02.2011**
(21) Anmeldenummer: 05027634.4
(22) Anmeldetag: 16.12.2005
(51) Int. Cl.: B01J 38/48

(54) **Verfahren zum Behandeln von Rauchgas-Katalysatoren**
Process for the treatment of catalyst for the purification of flue gas
Procédé de traitement d'un catalyseur pour la purification de gaz de combustion

(43) Veröffentlichungstag der Anmeldung: 20.06.2007
(60) Teilanmeldung: 10170470.8
(73) Patentinhaber: Evonik Energy Services GmbH, 45128 Essen (DE)
(72) Erfinder: Blohm, Maik, 26123 Oldenburg (DE); Brüggendick, Hermann, Dr., 46514 Schermbeck (DE)
(74) Vertreter: Zenz

(56) Entgegenhaltungen:
- EP-A- 0 681 870
- EP-A- 0 715 889
- EP-A1- 0 634 208
- EP-A2- 0 258 942
- WO-A-96/16737
- WO-A-99/12642
- WO-A-2004/004902
- WO-A2-2005/060639
- DE-A1- 1 944 933
- DE-A1- 19 734 975
- US-A- 3 897 368
- FINO D ET AL: "A multifunctional filter for the simultaneous removal of fly-ash and NOx from incinerator flue gases" CHEMICAL ENGINEERING SCIENCE, OXFORD, GB, Bd. 59, Nr. 22-23, November 2004 (2004-11), Seiten 5329-5336, XP004668448 ISSN: 0009-2509

## Beschreibung

Die Erfindung betrifft ein Verfahren zum Behandeln eines Katalysatorträgers.

Um chemische Reaktionen in Fluidströmen katalytisch zu beschleunigen, werden Katalysatoren verwendet, die auf Katalysatorträgern aufgebracht oder in diesen enthalten sind. Diese weisen üblicherweise wenigstens eine Kontaktfläche eines porösen Materials auf. Die durch das poröse Material gebildete und vergrößerte Oberfläche ist mit aktiven Zentren belegt, die eine Reaktion von im Fluidstrom mitgeführten Reaktanden begünstigen. Unter Kontaktfläche ist dabei eine makroskopische Begrenzung des Trägermaterials zu verstehen, die an den Fluidstrom angrenzt. Diese Kontaktfläche ist von den Porenwandungsflächen zu unterscheiden, die mit kleineren, teilweise mikroskopischen Abmessungen durch Porenräume bzw. Porenvolumen begrenzende Flächen gebildet sind. Die Porenwandungsflächen von solchen Poren, die in eine Öffnung in der Kontaktfläche münden, gehen in die Kontaktfläche über und vergrößern die für den Fluidstrom zugängliche Oberfläche.

Das strömende Fluid und mit ihm die Reaktanden treten (diffundieren) in das aus Poren gebildete Porensystem ein, gelangen in Kontakt mit den aktiven Zentren, die sich an den Porenwandungsflächen befinden und werden dort adsorbiert. Dabei werden die Reaktanden einer Reaktion unterworfen und die Reaktionsprodukte werden durch Desorption freigesetzt und diffundieren aus dem Porensystem in den Fluidstrom zurück. Derartige Katalysatorträger werden insbesondere bei Prozessen verwendet, bei denen Abgase von unerwünschten mitgeführten Stoffen befreit werden sollen, wie z.B. bei der Rauchgasreinigung in Verbrennungskraftwerken.

Bei einer Verbrennung fossiler Brennstoffe (oder auch von Abfällen und/oder Biomasse) in Kraftwerken werden Luftschadstoffe gebildet, die wegen ihrer Umweltschädlichkeit entfernt werden sollten. Neben den Stäuben, die aus Rauchgasströmen durch Einrichtungen zur Staubabscheidung entfernbar sind, werden Schwefelverbindungen mit Entschwefelungsanlagen entfernt. In fossilen Brennstoffen sind jedoch insbesondere auch Stickstoffverbindungen enthalten, die zu Stickoxiden im Rauchgas umgesetzt werden. Ferner wird teilweise Stickstoff der Verbrennungsluft unter den bei der Verbrennung vorliegenden Bedingungen in Stickoxide umgewandelt. Entsprechend wird bei der Entstehung von Stickoxiden zwischen thermischer Entstehung, prompter Stickoxidbildung und Stickoxidbildung aus Brennstoffstickstoff unterschieden. Der Anteil von Stickoxiden (NOₓ) im Abgas ist aus Gründen der Umweltbelastung zu reduzieren.

Neben der Verminderung der Stickoxidbildung durch primäre, also feuerungstechnische Maßnahmen, ist bei Kraftwerken zunehmend auch die Anwendung sekundärer Maßnahmen üblich, also die NOₓ-Entfernung aus den Rauchgasen.

Insbesondere katalytische Reduktionsverfahren sind aufgrund ihrer großtechnischen Anwendbarkeit neben anderen Verfahren (z. B. selektiver nichtkatalytischer Reduktion) relevant.

Die sogenannten selektiven katalytischen Reduktionsverfahren (SCR) dienen der NOₓ-Reduktion in großtechnischem Maßstab. Dabei wird das NOₓ mit NH₃ (Ammoniak) zu Wasser und Stickstoff umgesetzt. In Anwesenheit von Katalysatoren läuft die Reaktion rascher und/oder bei geringerer Temperatur ab und ist daher auch für hohe Strömungsgeschwindigkeiten der Rauchgasströme geeignet. Die verwendeten Katalysatoren bestehen üblicherweise aus keramischen Grundmaterialien als Katalysatorträger, in welche aktive Metallverbindungen homogen eingebracht oder auf deren Oberflächen aktive Metallverbindungen aufgebracht sind, welche sich mit dem Grundmaterial verbinden (eine einfache Beschichtung mit Metallverbindungen verbietet sich meist aufgrund der mechanischen Belastungen im Rauchgasstrom). Als Hauptkomponente für die Katalysatorträger wird oft Titandioxid verwendet, die aktiven Zentren bilden Beimengungen aus Vanadium-, Wolfram-, Molybdän-, Kupfer- und/oder Eisen-Verbindungen. Auch Zeolite können als Katalysatorträger eingesetzt werden.

Problematisch ist bei der Verwendung von Katalysatoren zur Stickoxidreduzierung, daß es konkurrierende Reaktionen gibt, welche ebenfalls von den aktiven Zentren begünstigt werden und die insbesondere eine unerwünschte Oxidation von Schwefeldioxid zu Schwefeltrioxid zur Folge haben.

Ferner nehmen mit zunehmender Standzeit des Katalysators die Aktivität des Katalysators (die gewünschte Stickoxid-Reduktion) und (aufgrund verminderter Konkurrenz) das Verhältnis von erwünschter katalytischer Wirkung zu unerwünschter katalytischer Wirkung ab. Daher ist nach gewisser Zeit die Reaktivierung von Katalysatorträgern erforderlich, bei der die Katalysatorträger gereinigt werden, Reaktionsprodukte entfernt werden und das Trägermaterial mit neuen aktiven Zentren belegt bzw. dotiert wird. Dazu wird eine katalytisch relevante Substanz mit Hilfe eines Transportfluids in Poren des Katalysatorträgers eingebracht. Das Einbringen erfolgt durch Öffnungen in der Kontaktfläche, in welche die Poren jeweils münden (Poren ohne Fluidverbindung zu Öffnungen in der Kontaktfläche sind nicht relevant, da in diese im Betrieb kein Rauchgas eindringen kann). Die katalytisch relevante Substanz verbleibt nach Entfernen des Transportfluids auf Porenwandungsflächen der Poren und bildet dort aktive Zentren.

Aus der EP 0974397A2 ist ein Verfahren zur Regeneration von Katalysatoren bekannt. Die Katalysatoren werden gereinigt und unter Einwirkung einer säurehaltigen Lösung behandelt. Anschließend werden die Katalysatoren mit einer katalytisch aktiven Substanz imprägniert.

Üblicherweise weisen derart reaktivierte Katalysatoren eine vergleichbare Aktivität auf wie neu hergestellte Katalysatoren. Allerdings kommt es vor, daß sich das Verhältnis von Aktivität (der Katalyse der Stickoxid-Reaktion) zu unerwünschten Reaktionen verschlechtert.

An dieser Stelle setzt die Erfindung an.

Es ist Aufgabe der Erfindung, ein Verfahren zum Behandeln eines Katalysatorträgers zur Verfügung zu stellen, welches sowohl zum erstmaligen Herstellen von Katalysatoren als auch für deren erneute Aktivierung verwendet werden kann, und das eine hohe Aktivität des Katalysators ermöglicht, ohne die unerwünschten Nebenreaktionen zu verstärken.

Die Aufgabe wird erfindungsgemäß durch ein Verfahren mit den Merkmalen des Anspruchs 1 gelöst.

Gemäß dem Verfahren wird der SCR-Katalysatorträger gereinigt und Reaktionsprodukten werden vom SCR-Katalysatorträger entfernt.

Der wenigstens eine Kontaktfläche eines porösen Materials aufweisende Katalysatorträger wird anschließend behandelt, indem zunächst ein Blockier-Fluid in die Poren derart eingebracht wird, dass die Poren in kontaktflächen-fernen Bereichen jenseits einer bestimmten Porentiefe mit dem Blockier-Fluid befüllt werden.

Anschließend wird zumindest eine katalytisch relevante Substanz, aus welcher sich eine katalytisch relevante Substanz aus der Gruppe von Wolframoxid, Vanadiumpentoxid und Molybdänoxid bilden kann, mit Hilfe eines Transportfluids in (in Öffnungen in der Kontaktfläche mündende) Poren des Katalysatorträgers durch Tauchen eingebracht.

Im Weiteren werden das Blockier-Fluid und das Transportfluid aus den Poren entfernt, wobei die katalytisch relevante Substanz zumindest teilweise auf den Porenwandungsflächen verbleibt, so dass in wenigstens einer Mehrzahl der Poren eine auf den Porenwandungsflächen verbleibende oberflächenbezogene Menge der katalytisch relevanten Substanz von dem Ort innerhalb jeder Pore derart abhängt, dass die oberflächenbezogene Menge der katalytisch relevanten Substanz innerhalb der Pore bei Überschreiten der bestimmten Porentiefe abfällt.

Eine katalytisch relevante Substanz ist hier eine Substanz, die katalytisch aktiv ist oder aus der eine katalytisch aktive Substanz gebildet werden kann, beispielsweise durch Temperaturbehandlung (Kalzinieren). Das Transportfluid kann eine Flüssigkeit oder ein Gas oder ein beliebiges Gemisch, beispielsweise ein Aerosol oder ein Schaum sein. Die katalytisch relevante Substanz kann in dem Fluid gelöst oder als feinste Partikel verteilt sein, beispielsweise Bestandteil der Aerosoltröpfchen sein. Erfindungsgemäß erfolgt das Einbringen der katalytisch relevanten Substanz in die Poren derart, daß in wenigstens einer Mehrzahl der Poren eine auf den Porenwandungsflächen verbleibende oberflächenbezogene Menge der katalytisch relevanten Substanz von dem Ort innerhalb jeder Pore derart abhängt, daß die oberflächenbezogene Menge der katalytisch relevanten Substanz innerhalb der Pore bei Überschreiten einer bestimmten Porentiefe abfällt.

Die Erfindung basiert auf der Erkenntnis, daß die gewünschten katalytischen Reaktionen vorwiegend im kontaktflächennahen Bereich der Poren stattfinden und dort - aufgrund der Konkurrenz - die unerwünschten Reaktionen unterdrückt werden, wohingegen in tieferen Porenbereichen die unerwünschten Reaktionen überwiegen, weshalb dort die katalytisch aktiven Zentren reduziert werden sollten.

In das Porensystem des Katalysatorträgers wird die katalytisch relevante Substanz demnach differenziert eingebracht und es wird nicht (wie im Stand der Technik) das gesamte Porensystem mit der Substanz undifferenziert belegt. Die Mengenbelegung der Porenwandungsflächen (Porenoberflächen) mit der eingebrachten Substanz bzw. für die Füllung der Porenräume mit dem Transportfluid erfolgt in Abhängigkeit von der Lage bzw. Position des Ortes der jeweiligen Porenwandungsflächen oder Porenräume innerhalb der Pore. Je nachdem, in welcher Porentiefe die jeweilige Porenwandungsfläche liegt, also abhängig davon, welche Wegstrecke die Rauchgas-Bestandteile von der Öffnung der Pore in der Kontaktfläche bis zu dem Ort der Porenwandungsfläche zurückzulegen hat, verbleibt auf der Porenwandungsfläche unterschiedlich viel katalytisch relevante Substanz. Die Substanz liegt in ionischer Form im Transportfluid vor. Unter Porentiefe ist die Wegstrecke zu verstehen, die von der Öffnung entlang der Pore bis zu einem Ort in der Pore gemessen wird. Diese Strecke kann maximal so groß sein wie die gesamte Erstreckung der Pore in das Material, also die Gesamtporentiefe einer Pore. Erfindungsgemäß fällt die oberflächenbezogene Menge der katalytisch relevanten Substanz nach Überschreiten einer bestimmten Porentiefe ab. Dabei könnte die "bestimmte Porentiefe" für alle in die Kontaktfläche mündenden Poren unabhängig von dem Durchmesser und der Gestalt der Pore gleich sein. Vorzugsweise ist jedoch die bestimmte Porentiefe, jenseits welcher die Menge der katalytisch relevanten Substanz (bezogen auf die belegte Fläche) abfällt, von der Gestalt der Pore abhängig, z. B. für eine Pore großen Durchmessers größer als für eine enge Pore. Die bestimmte Porentiefe entspricht vorzugsweise einer bei einem gegebenen Fluid und einer vorgegebenen Zeit von dem Fluid erreichten Eindringtiefe in die Pore. Der Abfall der Belegung jenseits der bestimmten Porentiefe kann sprunghaft oder stetig erfolgen. Mit der Aussage, daß die Wandungsbelegung nach Erreichen einer bestimmten Porentiefe abfällt, soll nicht ausgeschlossen werden, daß die Wandungsbelegung auch vor Erreichen der bestimmten Porentiefe geringfügig abfallen kann; sie kann vor Erreichen der bestimmten Porentiefe ansteigen, konstant bleiben, geringfügig abfallen und/oder schwanken. Es soll aber damit ausgesagt werden, daß nach Erreichen der bestimmten Porentiefe ein qualitativer Sprung in der Stärke und/oder Art des Abfallens auftritt; der Abfall wird sprunghaft oder stetig stärker. Bei der so erreichten Belegung der Porenwandungen mit der katalytisch relevanten Substanz ist gewährleistet, daß die in tieferen Porenbereichen stattfindenden unerwünschten Konkurrenzreaktionen weniger unterstützt werden. Nach den im Stand der Technik bekannten Behandlungsverfahren nimmt im Gegensatz dazu oft die Oberflächenbelegung mit zunehmender Porentiefe zu, da das Porensystem mit einem Transportfluid geflutet wird und der Katalysatorträger anschließend getrocknet wird. Dabei wird regelmäßig die vom Transportfluid mitgeführte Substanz in den hinteren Porenräumen (unerwünscht) aufkonzentriert.

Bei dem erfindungsgemäßen Verfahrens wird zunächst ein Blockier-Fluid in die Poren derart eingebracht, dass die Poren in kontaktflächen-fernen Bereichen jenseits der bestimmten Porentiefe mit dem Blockier-Fluid gefüllt werden.

Anschließend wird das Transportfluid in die Poren des Materials eingebracht, wobei das Transportfluid die katalytisch relevante Substanz enthält. Das Blockier-Fluid und das Transportfluid werden wenigstens teilweise aus den Poren entfernt, so dass die katalytisch relevante Substanz zumindest teilweise auf den Porenwandungsflächen verbleibt.

Nachdem das Blockier-Fluid eingebracht ist, sind die zugänglichen Poren teilweise gefüllt, so dass tiefere Porenbereiche beim Einbringen des Transportfluids bereits von dem Blockier-Fluid blockiert sind. Beim nachfolgenden Einbringen des Transportfluids werden demgemäß insbesondere diejenigen (oberflächennahen) Porenbereiche gefüllt, die einen geringeren Abstand von der Kontaktfläche des Katalysatorträgers aufweisen. In dem Transportfluid ist die katalytisch relevante Substanz gelöst (oder sie wird auf sonstige Weise mit dem Fluid transportiert).

Im Idealfall sind nach Einbringen des ersten und des zweiten Fluids sämtliche zugänglichen Poren vollständig mit dem Blockier- und dem Transportfluid gefüllt. Da die katalytisch relevante Substanz in dem Transportfluid transportiert wird, geraten nur diejenigen (oberflächennahen) Porenwandungsflächen mit der katalytisch relevanten Substanz in Kontakt, die an das Transportfluid angrenzen. Zwar kann an der Phasengrenze zwischen dem Blockier-Fluid und dem Transportfluid auch eine Diffusion der katalytisch relevanten Substanz in das Blockier-Fluid stattfinden, diese ändert jedoch bei üblichen Verweilzeiten der Fluide in den Poren nichts daran, dass die Menge der eingebrachten katalytisch relevanten Substanz in Bereichen geringer Porentiefe wesentlich größer ist als in Bereichen größerer Porentiefe.

Nach Entfernen des Blockier-Fluids und des Transportfluids aus den Poren verbleibt katalytisch relevante Substanz in den Poren.

Gemäß der Erfindung gelangt in Bereiche geringer Porentiefe (kontaktflächennahe Porenbereiche) eine große Menge des Transportfluids mit der Substanz. In Porenbereiche, für deren Erreichen der Rauchgasstrom einen längeren Weg zurücklegen muß (große Porentiefe), wird weniger Substanz eingebracht.

Im Ergebnis liefert das erfindungsgemäße Verfahren einen aktivierten Katalysatorträger, der in den Porenbereichen, in die der Rauchgasstrom zusammen mit weiteren Soffen (z.B. Ammoniak) leicht gelangen kann, in hohem Maße aktive Zentren aufweist und der in denjenigen Bereichen, in denen es verstärkt zu den unerwünschten Nebenreaktionen kommt, weniger aktive Zentren enthält. Es ist dabei ohne Belang welche äußere Gestaltung der Katalysatorträger aufweist. Beispielsweise ist das Verfahren gleichermaßen auf Waben- oder Plattenkatalysatoren anwendbar.

Als Transportfluid kann jedes beliebige Fluid verwendet werden, in welchem eine katalytisch relevante Substanz mitführbar ist, z.B. durch Lösen der Substanz. Insbesondere können Gase, Flüssigkeiten oder auch Aerosole als Transportfluid verwendet werden. Unter katalytisch relevanter Substanz ist jeder Stoff zu verstehen, der eine katalytische Wirkung hat oder aus dem bei oder nach Aufbringen auf das Trägermaterial eine katalytisch wirksame Verbindung gebildet werden kann (z. B. durch physikalische und/oder chemische Nachbehandlungsschritte).

Die mit Hilfe des erfindungsgemäßen Verfahrens aktivierten Katalysatoren erzeugen bei vergleichbarer Leistung (Aktivität) weniger unerwünschte Nebenreaktionsprodukte, wie z. B. Schwefeltrioxid. Daher wird die Gefährdung nachfolgender Anlageteile durch Nebenreaktionsprodukte (Schwefeltrioxid führt beispielsweise zu Korrosion) vermindert, und deren Lebensdauer und die Betriebssicherheit der gesamten Anlage werden erhöht. Kosten für zusätzliche Wartung, Reparaturen und Produktionsausfälle werden vermieden, und das Risiko von Störfällen wird reduziert. Sichtbare Abgasfahnen werden vermindert. Gegebenenfalls kann eine ansonsten notwendige Schwefeltrioxidabscheidung entfallen.

Vorzugsweise erfolgt das Einbringen bei dem erfindungsgemäßen Verfahren derart, daß in wenigstens einer Mehrzahl der Poren eine auf den Porenwandungsflächen verbleibende oberflächenbezogene Menge der katalytisch relevanten Substanz innerhalb jeder Pore von der Porentiefe derart abhängt, daß die oberflächenbezogene Menge bis zu der bestimmten Porentiefe ansteigt, im wesentlichen konstant bleibt oder höchstens geringfügig abfällt und nach Überschreiten der bestimmten Porentiefe sprunghaft beginnt abzufallen oder der Anstieg der oberflächenbezogenen Menge nach Überschreiten der bestimmten Porentiefe sprunghaft beginnt abzufallen.

In der Nähe der Öffnung der Pore zur Kontaktfläche, also im Bereich geringer Porentiefe, fällt die Belegung der Porenwandung im wesentlichen nicht ab, wobei die Belegung hier verfahrensbedingt sowohl ab- als auch zunehmen kann. Ab einer Porentiefe tᵢ fällt die oberflächenbezogene Belegung in Richtung zunehmender Porentiefe deutlich ab, so daß Bereiche mit einer Porentiefe > tᵢ weniger belegt sind. Der Übergang kann dabei über eine geringe Distanz sprunghaft in dem Sinne sein, daß die Belegung innerhalb einer kurzen Distanz auf eine wesentlich geringere Belegung abfällt. Es ist jedoch auch möglich, daß ab einer Porentiefe > tᵢ die Belegung gleichmäßig (z. B. linear, quadratisch oder exponentiell) abnimmt. Mit der hier verwendeten Formulierung, daß die Menge oder deren Anstieg "sprunghaft beginnen abzufallen" soll eine Änderung der funktionalen Abhängigkeit der Flächenbelegung von der Porentiefe verstanden werden, bei der in der Funktion oder einer ihrer Ableitungen ein näherungsweise sprunghafter Abfall auftritt und die Funktion - abgesehen von überlagerten Schwankungen - stetig abfällt.

Bei dem erfindungsgemäßen Verfahren erfolgt das Einbringen des Blockier-Fluids in einer Mehrzahl der Poren vorzugsweise derart, daß die Mehrzahl der Poren in einem ersten Füllschritt zumindest teilweise mit dem ersten Fluid befüllt und anschließend in einem Entfernungsschritt das eingebrachte Blockier-Fluid teilweise aus den Poren entfernt wird.

Das Einbringen des Blockier-Fluids in einem Füllschritt und einem anschließenden Entfernungsschritt ist in der Praxis besonders einfach zu handhaben, da es die natürlichen Eigenschaften des Porensystems und der thermodynamischen Vorgänge in dem Katalysatorträger ausnutzt. Insbesondere kann ein Fluid durch gängige Verfahren in ein Porensystem eingebracht werden, so daß dieses bestmöglich gefüllt wird. Andererseits ist die Entfernung des Fluids aus den Bereichen geringer Porentiefe einfacher als aus Bereichen weiter innen liegender Poren.

In dem Füllschritt erfolgt zunächst eine nahezu vollständige Befüllung des zugänglichen Porensystems und danach, in dem Entfernungsschritt, die Entfernung des Blockier-Fluids aus denjenigen Bereichen der Poren, die sich in geringer Porentiefe befinden. Dadurch wird gewährleistet, daß das Fluid vornehmlich in den tiefer im Innern befindlichen Bereichen verbleibt, so daß die geforderte Verteilung des Blockier-Fluids zur Blockade dieser Bereiche für das Transportfluid gewährleistet ist.

Bei dem vorstehend genannten Verfahren ist es besonders vorteilhaft, wenn der Katalysatorträger während des Füllschritts in dem Blockier-Fluid getränkt wird.

Ein Tränken des Katalysatorträgers in dem Blockier-Fluid gewährleistet eine gleichmäßige Verteilung des Fluids in dem Porensystem, insbesondere wenn bekannte Unterstützungsmittel (z. B. Ultraschall, Heizung) eingesetzt werden. Eine solche Tränkung wird z. B. bei bekannten und undifferenzierten Verfahren zur Reaktivierung gereinigter Katalysatorträger eingesetzt; auf entsprechende Erfahrungen kann also zurückgegriffen werden. Diese bekannten Verfahren weisen jedoch die genannten Nachteile der undifferenzierten Verteilung der katalytisch relevanten Substanz auf. Bei dem erfindungsgemäßen Verfahren wird nur das Blockier-Fluid gleichmäßig verteilt. Für die gewünschte differenzierte Verteilung des Blockier-Fluids und mittelbar für die Verteilung der katalytisch relevanten Substanz sorgt hingegen nicht dieser Füllschritt, sondern der Entfernungsschritt (das teilweise Entfernen des Blockier-Fluids). Das Blockier-Fluid wird aus dem Porensystem des Katalysatorträgers vorzugsweise durch Trocknen teilweise entfernt.

Wird z. B. das Material des Katalysatorträgers in dem Blockier-Fluid getränkt und das zugängliche Porensystem nahezu vollständig mit dem Blockier-Fluid gefüllt, so wird in einem anschließenden Trocknungsschritt naturgemäß zunächst Fluid aus den kontaktoberflächennahen Bereichen des Porensystems entfernt. Dadurch ist die erfindungsgemäß geforderte Verteilung des Blockier-Fluids gewährleistet. Es ist vorteilhaft und ökonomisch, wenn dieses Trocknen zumindest zeitweise bei Unterdruck erfolgt, so daß der Trocknungsschritt wirtschaftlich und rasch durchgeführt werden kann.

Als katalytisch relevante Substanz kommt jede mit dem Transportfluid transportierbare Substanz in Frage. Es ist jedoch besonders vorteilhaft, wenn das Transportfluid als katalytisch relevante Substanz wenigstens eine Metallverbindung enthält. In Frage kommen alle Substanzen, aus denen katalytisch aktive Substanzen, insbesondere z. B. Wolframoxid, Vanadiumpentoxid oder Molybdän-, Kupfer- und Eisenoxide, gebildet werden können. Diese Substanzen liegen im Fluid vornehmlich als Ionen vor.

Es ist bei dem vorstehend geschilderten Verfahren dann, wenn das Transportfluid und das Blockier-Fluid mischbare Flüssigkeiten sind, besonders vorteilhaft, wenn das Blockier-Fluid katalytisch neutrale Ionen enthält. Die im Blockier-Fluid vorliegenden katalytisch neutralen Ionen verlangsamen die Diffusion der katalytisch relevanten Substanz, die mit dem Transportfluid eingebracht wird und die teilweise an den Phasengrenzen zwischen Blockier-Fluid und Transportfluid in die Bereiche des Blockier-Fluids eindiffundiert. Es ist besonders vorteilhaft, wenn im Blockier-Fluid solche katalytisch neutralen Ionen verwendet werden, die mit der katalytisch relevanten Substanz neutralisierend reagieren können. Die Ionen reagieren an den Grenzflächen der Fluide miteinander, so daß ein tieferes Eindringen der katalytisch relevanten bzw. aktiven Substanz in die mit dem Blockier-Fluid Porenbereiche verhindert wird. Zumindest liegt dort die Substanz nicht mehr in einer katalytisch wirksamen Form vor. Eine andere Möglichkeit, die Durchmischung des Transportfluids mit dem Blockier-Fluid zu vermindern besteht darin, die Temperatur abzusenken.

Als Blockier- und Transportfluide kommen sowohl Gase als auch Flüssigkeiten in Betracht, wobei in der Praxis vornehmlich Substanzen verwendet werden, die bei den Bedingungen, bei denen das erfindungsgemäße Verfahren durchgeführt wird, als Flüssigkeiten vorliegen.

Vorzugsweise werden als Blockier-Fluid und Transportfluid sich jeweils nicht oder wenig durchmischende Fluide gewählt. In diesem Fall wird eine Durchmischung der beiden Fluide stark reduziert und die Diffusion der katalytisch relevanten Substanz aus dem Transportfluid in die Bereiche des Blockier-Fluids wird erheblich verringert.

Die Erfindung wird nun anhand der beiliegenden Zeichnungen näher erläutert, in denen Schritte einer bevorzugten Ausführungsform des Verfahrens gezeigt sind.

Die Zeichnungen zeigen, in
Figur 1 eine schematische Ansicht der Anordnung mehrerer Kanal-Katalysatorträgerelemente in einem Rahmen.
Figur 2 eine schematische Perspektivansicht der Anordnung der Kanal-Katalysatorträgerelemente gemäß Figur 1.
Figur 3 eine schematische Darstellung eines Grenzbereichs eines Katalysatorträgers zu einem Rauchgasstrom.
Figur 4 den Grenzbereich aus Figur 3, bei Durchführung eines ersten Füllschritts gemäß einer Ausführungsform der Erfindung.
Figur 5 den Grenzbereich aus Figur 4, nach Durchführung eines ersten Entfernungsschritts gemäß einer Ausführungsform der Erfindung.
Figur 6 den Grenzbereich aus Figur 5, bei Durchführung eines zweiten Füllschritts gemäß einer Ausführungsform der Erfindung.
Figur 7 den Grenzbereich aus Figur 6, nach Durchführung eines zweiten Entfernungsschritts gemäß einer Ausführungsform der Erfindung.

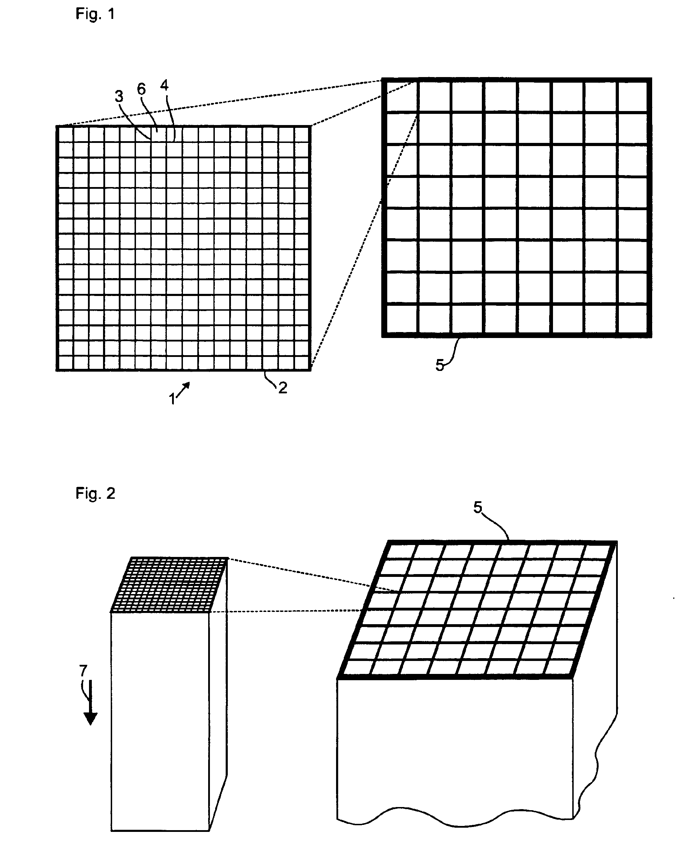

Gemäß dem dargestellten Ausführungsbeispiel werden Katalysatorträger verwendet, die eine wabenförmige Struktur mit rechteckigen Waben aufweisen. Ein solches Katalysatorträgerelement ist in Figur 1 mit der Bezugsziffer 1 bezeichnet. Der Katalysatorträger 1 weist eine umlaufende Wandung 2 auf, die eine quadratische Begrenzung bildet. Zwischen sich gegenüberliegenden, parallelen Wandungsabschnitten verlaufen jeweils in vertikaler Richtung Trennwände 3 und in horizontaler Richtung Trennwände 4, welche den Raum innerhalb der umlaufenden Wandung 2 in gleichförmige Waben teilen. Die aus der Mehrzahl der Wände 3 und 4 gebildeten Waben sind für Rauchgase durchströmbar (senkrecht zu der Blattebene). Beispielsweise begrenzen die Wand 3 und die Wand 4 einen wabenförmigen Rauchgaskanal 6. Das Katalysatorträgermaterial, aus dem die Wände 3 und 4 und die stärkere, umlaufende Wandung 2 gebildet sind, besteht aus einer porösen Keramik, so daß die Wände 3 und 4 stark vergrößerte Oberflächen aufweisen.

Mehrere derartiger Katalysatorträger 1 werden in einem Metallrahmen 5 nebeneinander und übereinander angeordnet, um einen größeren Durchströmungsquerschnitt für das Rauchgas zu bilden.

In Figur 2 ist die Anordnung der Katalysatorträger aus Figur 1 perspektivisch dargestellt. In dem Rahmen 5 sind die Trägerelemente 1 horizontal und vertikal nebeneinander angeordnet. Das poröse Material der Katalysatorträger weist aktive Zentren auf, die Reaktionen von Stoffen, die der Rauchgasstrom mit sich führt, beschleunigen. Aufgrund der Wabenstruktur und der Hintereinanderschaltung einer Mehrzahl der Trägerelemente ist ein intensiver Kontakt der aktiven Zentren mit dem Rauchgas gewährleistet.

In den folgenden Figuren wird ein Ausschnitt aus einem Wandbereich des Katalysatorträgers betrachtet.

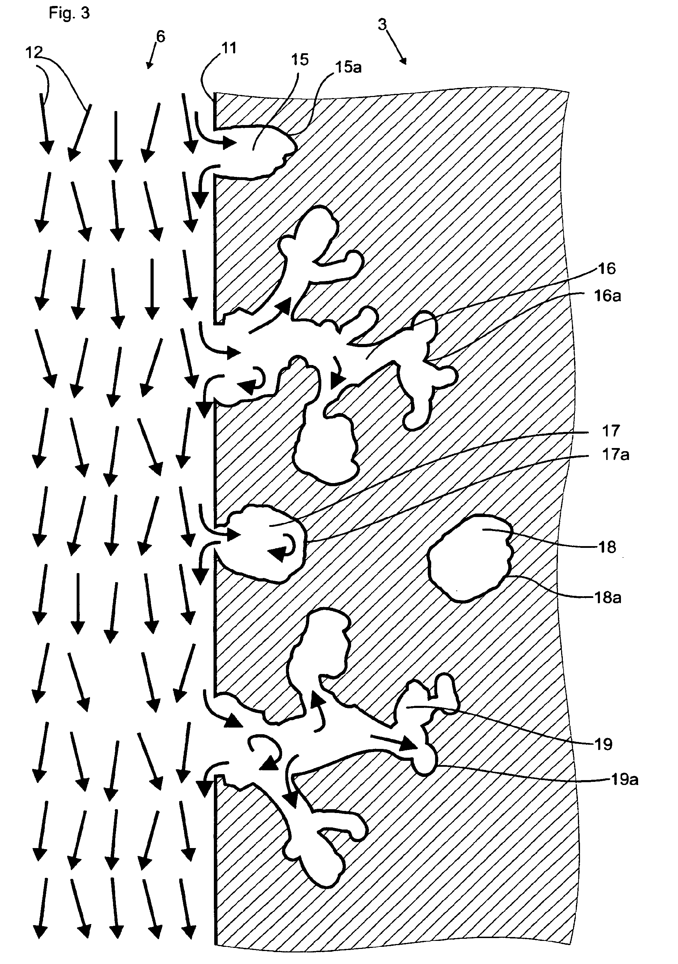

Figur 3 zeigt einen schematischen und vergrößerten Querschnitt durch einen oberflächennahen Bereich einer Wandung 3 des Katalysatorträgers 1. Die Kontaktfläche 11 bildet eine Grenzfläche zwischen dem Material des Katalysatorträgers bzw. der Wandung 3 und dem Rauchgaskanal 6. In dem Rauchgaskanal 6 strömt das Rauchgas 12 durch den Strömungsbereich des offenen Wabenraums.

Im Material der Wandung 3 sind mehrere Poren 15, 16, 17, 18 und 19 ausgebildet. Die Poren 15, 16, 17 und 19 stehen durch Öffnungen in der Kontaktfläche 11 mit dem Strömungskanal 6 in Verbindung. Die Pore 18 ist als Blase ausgebildet und besitzt keine Verbindung zu dem Rauchgaskanal 6.

Das Rauchgas strömt aus dem Rauchgaskanal 6 durch die Öffnungen der Poren in der Kontaktfläche 11 in die zugänglichen Poren 15, 16, 17 und 19 ein, während darin befindliches Rauchgas wieder ausströmt. Je weiter das Rauchgas sich innerhalb einer Pore von der Öffnung in der Kontaktfläche entfernt und in das tiefer im Materialinneren gelegene Porensystem bewegt, desto größer ist die Verweildauer dieses Rauchgases im Porensystem. Überwiegend in diesen Bereichen mit größerem Abstand von der Kontaktfläche 11 finden die unerwünschten Nebenreaktionen statt.

Die Grenzflächen zwischen den Porenräumen und dem Material des Katalysatorträgers bilden die Porenwandungsflächen 15a, 16a, 17a, 18a und 19a. Die Porenwandungsflächen sollen mit aktiven Zentren belegt werden, an denen die mit dem Rauchgasstrom geführten Schadstoffe, insbesondere Stickoxide, mit dem Rauchgasstrom zugegebenem Ammoniak reduziert werden. In den Poren 15 und 17, deren Porenräume sich von der Kontaktfläche nicht weit in das Innere des Katalysatorträgermaterials erstrecken, wird diese Reaktion begünstigt. Die Poren 16 und 19 weisen jedoch eine größere Porenwandungsfläche auf, erstrecken sich mit zunehmender Porentiefe weiter in das Material des Katalysatorträgers und sind verzweigt ausgebildet. Das Rauchgas hat entsprechend einen längeren Diffusionsweg von den Öffnungen in der Kontaktfläche bis zu den tiefer im Material gelegenen Räumen zurückzulegen.

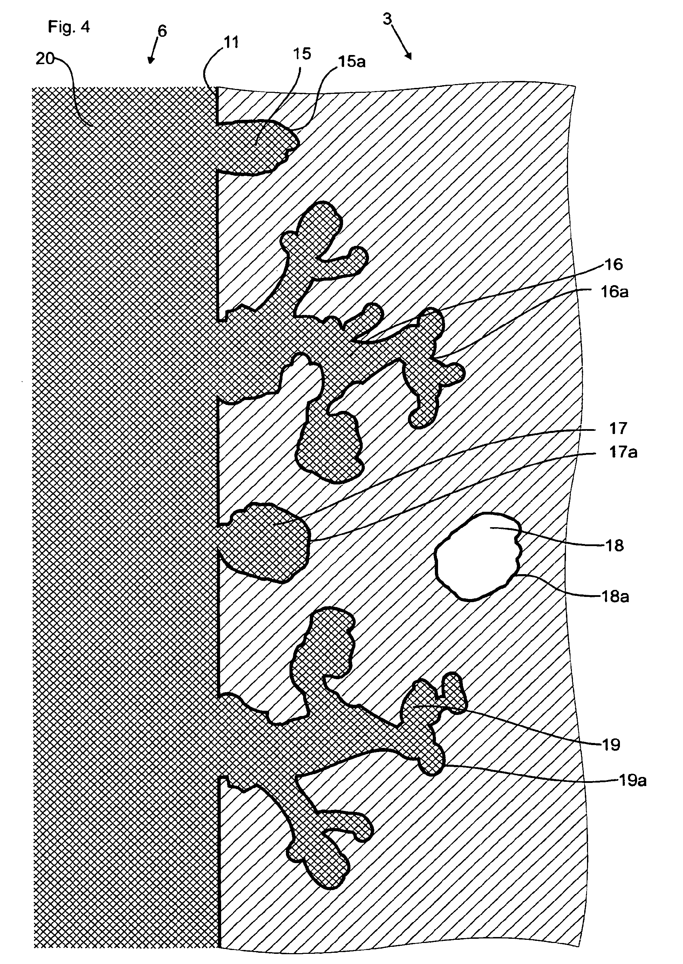

Die Figuren 4, 5, 6 und 7 zeigen schematisch den Zustand des in Figur 3 gezeigten Porensystems während oder nach der Durchführung des erfindungsgemäßen Verfahrens zur Behandlung eines Katalysatorträgers.

In Figur 4 ist die Wandung 3 des in ein erstes Fluid 20 getauchten Katalysatorträgers dargestellt. Die Kontaktfläche 11 ist von dem Fluid 20 benetzt und die zugänglichen Poren 15, 16, 17 und 19 sind vollständig mit dem Fluid gefüllt. Eine Füllung der Poren durch das Fluid kann durch Unterstützung des Tränk- bzw. Tauchvorgangs durch Ultraschall und Drehen bzw. Schütteln des Katalysatorträgers erreicht werden. Die blasenartige Pore 18 ist nicht mit dem Fluid 20 gefüllt, da sie keine Verbindung zu dem Strömungskanal 6 aufweist.

Als Fluid 20 wird im einfachsten Fall Wasser verwendet, welches keine katalytisch relevanten Substanzen enthält. Nach dem Tränken des Katalysatorträgers wird der Katalysatorträger aus dem Wasser entnommen, abgetropft und in einem Trocknungsschritt wird das Fluid 20 teilweise aus dem Porensystem entfernt. Der Trocknungsschritt kann zur Beschleunigung des Vorgangs bei erhöhter Temperatur oder bei Unterdruck erfolgen.

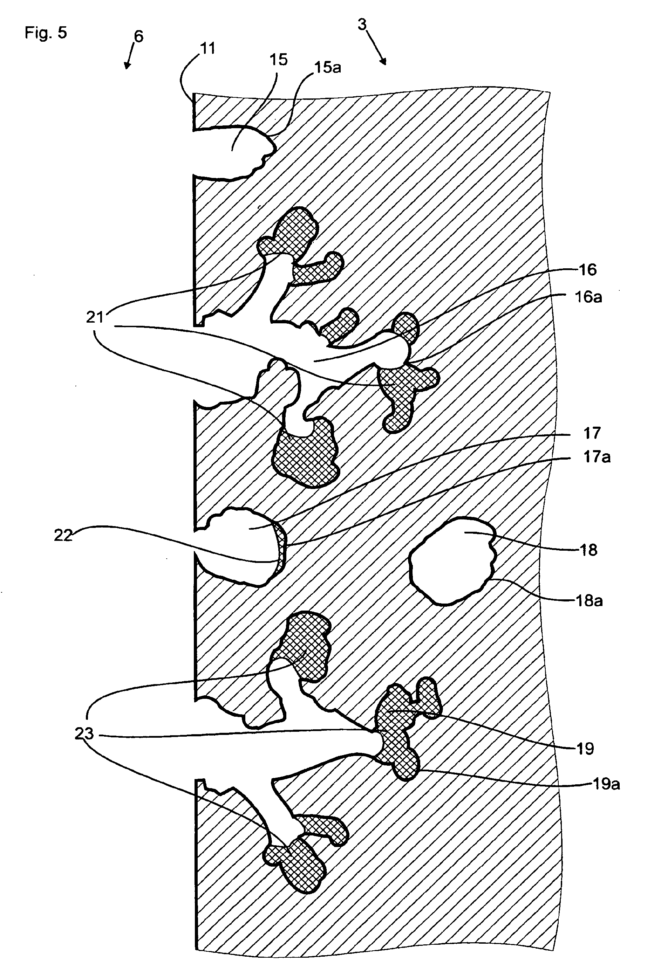

Der Zustand des Oberflächenabschnitts aus Figur 4 nach dem Trocknungsschritt ist in Figur 5 gezeigt.

Die Poren 16, 17 und 19 sind weiterhin teilweise mit Fluidresten 21, 22 und 23 gefüllt, da der Trocknungsschritt erfindungsgemäß abgebrochen wird, bevor das Fluid vollständig aus den Poren entfernt ist. Das Fluid 20 verbleibt aus thermodynamischen Gründen insbesondere in solchen Porenbereichen, die von den Außenöffnungen in der Kontaktfläche 11 weiter entfernt sind, die also in größerer Porentiefe liegen. In diesen Bereichen sind die Einflüsse des Trocknungsvorgangs geringer. Außerdem können die Fluidreste aus diesen Bereichen erst entfernt werden, wenn das vorgelagerte Fluid durch die Porenöffnung in der Kontaktfläche 11 entfernt wurde.

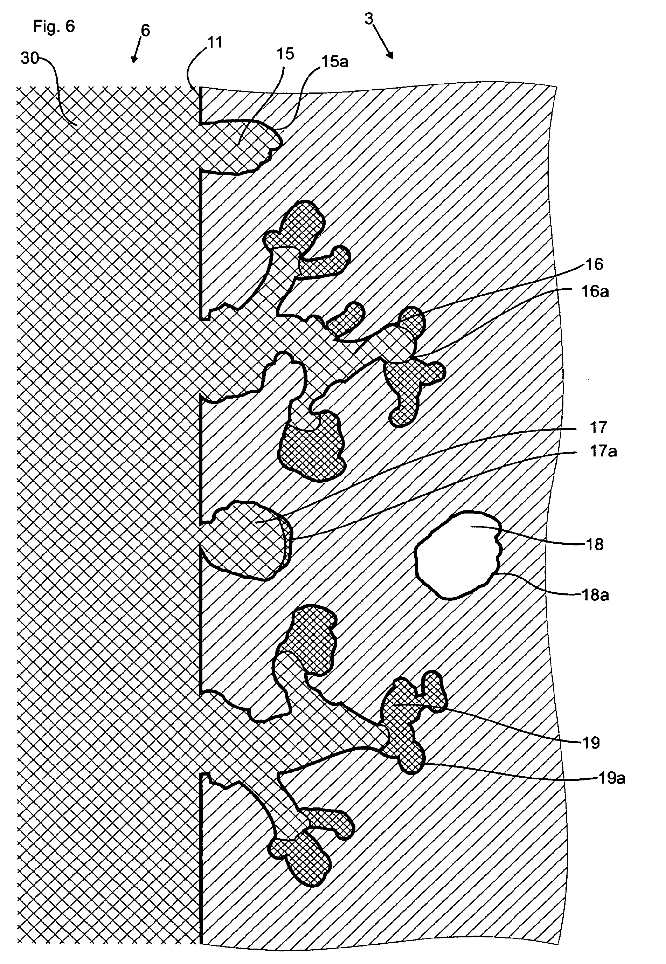

In einem weiteren Füllschritt wird danach der Katalysatorträger mit einem zweiten Fluid 30 getränkt (z.B. durch Tauchen). Der Zustand des Oberflächenabschnitts aus Figur 5 nach diesem Füllschritt ist in Figur 6 gezeigt.

In dem zweiten Fluid 30 ist die katalytisch relevante Substanz gelöst. Das Fluid 30 dringt ebenfalls, wie zuvor das Fluid 20, in das Porensystem ein, jedoch nur in solche zugänglichen Bereiche, die nicht von dem ersten Fluid 20 blockiert sind. Dementsprechend enthalten insbesondere die im Betrieb für das Rauchgas gut zugänglichen Bereiche das zweite Fluid 30 (mit katalytisch relevanter Substanz), während die tiefliegenden Verzweigungen und Porenräume das Fluid 20 (ohne katalytische relevante Substanz) enthalten. Diejenigen Porenwandungen, die mit dem Fluid 30 in Kontakt stehen, gelangen entsprechend auch in Kontakt mit der katalytisch relevanten Substanz. Die Porenwandungen hingegen, die in Kontakt mit dem Fluid 20 stehen, treten nicht in Kontakt mit der katalytisch relevanten Substanz.

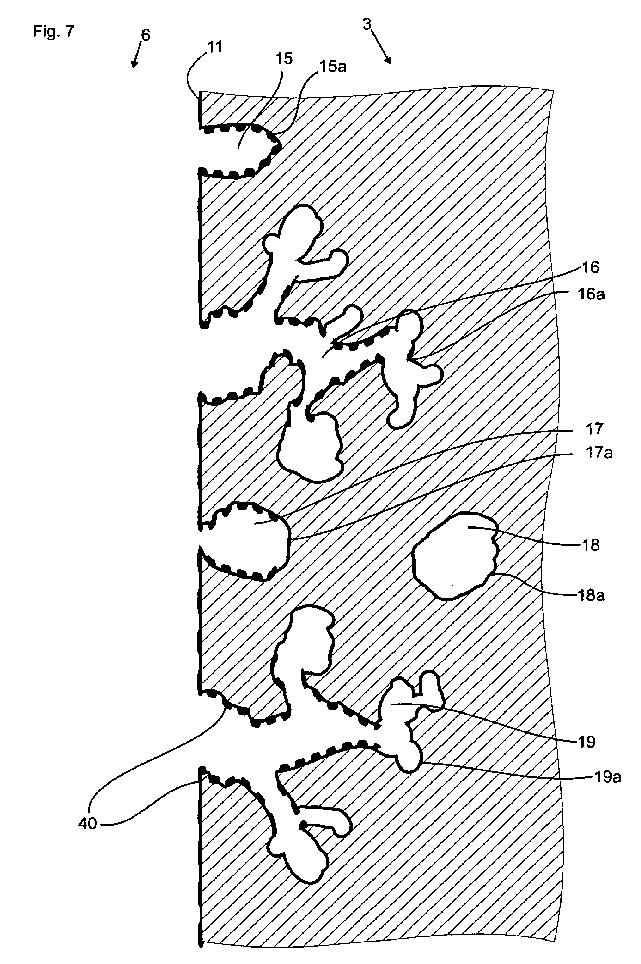

In einem abschließenden Trocknungsschritt werden sowohl das Fluid 20 als auch das Fluid 30 aus dem Porensystem entfernt, z.B. durch eine Erwärmung des Katalysatorträgers bei Unterdruck. Der Zustand des Oberflächenabschnitts aus Figur 6 nach diesem Schritt ist in Figur 7 gezeigt.

Die katalytisch relevante Substanz verbleibt teilweise auf denjenigen Porenwandungsflächen, mit denen sie in Kontakt getreten ist. Sowohl die Kontaktfläche 11, als auch Teile der Porenwandungsflächen 15a, 16a, 17a und 19a sind mit katalytisch aktiven Zentren 40 belegt. Die Bereiche der Poren 16, 17 und 19, die einen größeren Abstand zu der Kontaktfläche 11 aufweisen und in die daher das Rauchgas in Katalysebetrieb des Katalysatorträgers nur schlecht gelangt, weisen keine (oder kaum) katalytisch aktiven Zentren auf. Die Porenbereiche mit geringem Abstand von der Kontaktfläche sind hingegen mit den aktiven Zentren dicht belegt. Dementsprechend ist die Verteilung der aktiven Zentren nach Durchführung des erfindungsgemäßen Verfahrens nicht undifferenziert, wie bei einer Tränkung des Materials in einem Fluid mit einer katalytisch relevanten Substanz gemäß dem Stand der Technik. Vielmehr ist die Behandlung oder Dotierung derart differenziert, daß verschiedene Bereiche der Porenwandungsflächen, je nach Porentiefe bzw. nach Zugänglichkeit für das Rauchgas, unterschiedlich viele aktive Zentren aufweisen.

Wenn als Transportfluid Wasser oder eine wäßrige Lösung verwendet wird, kann als katalytisch relevante Substanz eine wasserlösliche Metallverbindung verwendet werden, aus der nach dem Trocknen und einem Temperschritt eine katalytisch aktive Substanz gebildet wird. Beispielsweise kann zur Bildung von Vanadiumpentoxid Ammoniummetavanadat oder Vanadyloxalat (oder das Salz einer anderen organischen Säure) verwendet werden. Vorzugsweise werden solche löslichen Stoffe verwendet, bei denen bei einer Temperaturbehandlung flüchtige Verbindungen (Ammoniak, Wasser, CO₂) und die gewünschten Metalloxide (V₂O₅ z. B.) gebildet werden.

Im Rahmen der Erfindung sind zahlreiche Abwandlungen möglich. Einige Möglichkeiten für die Durchführung des erfindungsgemäßen Verfahrens wurden beschrieben, jedoch sind weitere Wege zur Durchführung des Verfahrens im Rahmen der Erfindung realisierbar.

## Patentansprüche

1. Verfahren zum Reaktivieren eines Katalysatorträgers, wobei der Katalysatorträger zur Anwendung als SCR-Waben- oder SCR-Platten-Katalysatorträger ausgebildet ist und wenigstens eine Kontaktfläche eines porösen Materials aufweist, an der ein Fluid vorbeiführbar ist, umfassend die Schritte:
Reinigen des SCR-Katalysatorträgers und Entfernen von Reaktionsprodukten vom SCR-Katalysatorträger,
Einbringen zumindest einer Substanz aus welcher sich eine katalytisch relevante Substanz aus der Gruppe von Wolframoxid, Vanadiumpentoxid und Molybdänoxid bilden kann, mit Hilfe eines Transportfluids in Poren des Katalysatorträgers, wobei die Substanz im Transportfluid als Ionen vorliegt und wobei die katalytisch relevante Substanz nach Entfernen des Transportfluids auf Porenwandungsflächen verbleibt,
wobei das Einbringen derart erfolgt, daß zunächst ein Blockier-Fluid in die Poren derart eingebracht wird, dass die Poren in kontaktflächen-fernen Bereichen jenseits einer bestimmten Porentiefe mit dem Blockier-Fluid befüllt werden,
anschließendes Einbringen des Transportfluids in die Poren durch Eintauchen des Katalysatorträgers in das Transportfluid, und
Entfernen des Blockier-Fluids und des Transportfluids aus den Poren, wobei die katalytisch relevante Substanz zumindest teilweise auf den Porenwandungsflächen verbleibt, so dass in wenigstens einer Mehrzahl der Poren eine auf den Porenwandungsflächen verbleibende oberflächenbezogene Menge der katalytisch relevanten Substanz von dem Ort innerhalb jeder Pore derart abhängt,
daß die oberflächenbezogene Menge der katalytisch relevanten Substanz innerhalb der Pore bei Überschreiten der bestimmten Porentiefe abfällt.

2. Verfahren nach Anspruch 1, **dadurch gekennzeichnet, daß** das Einbringen des Blockier-Fluids umfaßt:
einen Füllschritt, in dem das Blockier-Fluid in eine Mehrzahl der Poren derart eingebracht wird, daß die Poren zumindest teilweise mit dem Blockier-Fluid gefüllt werden,
einen Entfernungsschritt, in dem das eingebrachte Blockier-Fluid derart teilweise entfernt wird, daß lediglich die kontaktflächen-fernen Bereiche jenseits der bestimmten Porentiefe befüllt bleiben.

3. Verfahren nach Anspruch 2, **dadurch gekennzeichnet, daß** der Katalysatorträger während des Füllschritts in dem Blockier-Fluid getränkt wird.

4. Verfahren nach einem der Ansprüche 1 bis 3, **dadurch gekennzeichnet, daß** Hauptbestandteil des Blockier-Fluids und/oder des Transportfluids Wasser ist.

5. Verfahren nach Anspruch 1, **dadurch gekennzeichnet, daß** in dem Blockierfluid solche katalytisch neutralen Ionen verwendet werden, die mit der katalytisch relevanten Substanz reagieren können.

6. Verfahren nach einem der Ansprüche 1 bis 5, **dadurch gekennzeichnet, daß** als Blockier-Fluid und Transportfluid sich jeweils nicht durchmischende Fluide gewählt werden.

## Claims

1. A method of reactivating a catalyst carrier, wherein the catalyst carrier is constructed for use as an SCR honeycomb or SCR plate catalyst carrier and has at least one contact surface of a porous material, along which a fluid may be passed, including the following steps:
cleaning the SCR catalyst carrier and removing reaction products from the SCR catalyst carrier,
introducing at least one substance, from which a catalytically relevant substance from the group comprising tongsten oxide, vanadium pentoxide and molybdenum oxide can form, with the aid of a transport fluid into the pores of the catalyst carrier, wherein the substance is present in the transport fluid in the form of ions and wherein the catalytically relevant substance remains on pore wall surfaces after removal of the transport fluid,
wherein the introduction is effected such that a blocking fluid is firstly introduced into the pores such that the pores are filled in regions remote from contact surfaces with the blocking fluid beyond a predetermined pore depth,
subsequently introducing the transport fluid into the pores by dipping the catalyst carrier into the transport fluid, and
removing the blocking fluid and the transport fluid from the pores, wherein the catalytically relevant substance remains at least partially on the pore wall surfaces so that in at least a majority of the pores a surface coated amount of the catalytically relevant substance remaining on the pore walls depends on the position within each pore such that
the surface coated amounted of the catalytically relevant substance within the pores decreases when the predetermined pore depth is exceeded.

2. A method as claimed in claim 1, **characterised in that** the introduction of the blocking fluid includes:
a filling step, in which the blocking fluid is introduced into a majority of the pores such that the pores are filled at least partially with the blocking fluid,
a removal step, in which the introduced blocking fluid is partially removed such that only the regions remote from contact surfaces remain filled beyond the predetermined pore depth.

3. A method as claimed in claim 2, **characterised in that** the catalyst carrier is soaked in the blocking fluid during the filling step.

4. A method as claimed in one of claims 1 to 3, **characterised in that** the main component of the blocking fluid and/or of the transport fluid is water.

5. A method as claimed in claim 1, **characterised in that** catalytically neutral ions are used in the blocking fluid which can react with the catalytically relevant substance.

6. A method as claimed in one of claims 1 to 5, **characterised in that** immiscible fluids are selected as the blocking fluid and transport fluid.

## Revendications

1. Procédé de réactivation d'un support de catalyseur, dans lequel le support de catalyseur est destiné à un usage comme support de catalyseur à alvéoles ou à plaques de type SCR et présente au moins une surface de contact d'un matériau poreux, devant laquelle peut passer un fluide, comprenant les étapes consistant à :
purifier le support de catalyseur de type SCR et éliminer des produits réactionnels du support de catalyseur de type SCR,
introduire au moins une substance, à partir de laquelle peut se former une substance importante au plan catalytique appartenant au groupe constitué de l'oxyde de tungstène, du pentoxyde de vanadium et de l'oxyde de molybdène, à l'aide d'un fluide de transport dans les pores du support de catalyseur, la substance dans le fluide de transport se présentant sous la forme d'ions et la substance importante au plan catalytique restant, après l'élimination du fluide de transport, sur les surfaces de parois des pores,
dans lequel l'introduction se fait de sorte qu'un fluide de blocage soit d'abord introduit dans les pores pour que ceux-ci soient remplis du fluide de blocage dans les zones éloignées des surfaces de contact au-delà d'une profondeur de pores déterminée,
introduire ensuite le fluide de transport dans les pores par immersion du support de catalyseur dans le fluide de transport, et
éliminer le fluide de blocage et le fluide de transport des pores, dans lequel la substance importante au plan catalytique reste au moins partiellement sur les surfaces de parois des pores de sorte que, dans au moins une pluralité des pores, une quantité de la substance importante au plan catalytique rapportée à la surface, restant sur les surfaces de parois des pores, dépende de l'emplacement à l'intérieur de chaque pore de sorte que
la quantité de la substance importante au plan catalytique rapportée à la surface chute à l'intérieur du pore lorsque la profondeur de pores déterminée est dépassée.

2. Procédé selon la revendication 1, **caractérisé en ce que** l'introduction du fluide de blocage comprend :
une étape de remplissage, dans laquelle le fluide de blocage est introduit dans une pluralité de pores de sorte que les pores soient remplis au moins partiellement du fluide de blocage,
une étape d'élimination, dans laquelle le fluide de blocage introduit est éliminé partiellement de sorte que seules les zones éloignées des surfaces de contact restent remplies au-delà de la profondeur de pores déterminée.

3. Procédé selon la revendication 2, **caractérisé en ce que** le support de catalyseur est imprégné pendant l'étape de remplissage dans le fluide de blocage.

4. Procédé selon l'une quelconque des revendications 1 à 3, **caractérisé en ce que** le constituant principal du fluide de blocage et/ou du fluide de transport est l'eau.

5. Procédé selon la revendication 1, **caractérisé en ce qu'**on utilise dans le fluide de blocage des ions neutres au plan catalytique qui peuvent réagir avec la substance importante au plan catalytique.

6. Procédé selon l'une quelconque des revendications 1 à 5, **caractérisé en ce qu'**on choisit comme fluides de blocage et de transport, respectivement, des fluides qui ne se mélangent pas.
